# EUROPEAN PATENT APPLICATION

(11) **EP 4 393 570 A1**
(43) Date of publication of application: **03.07.2024**
(21) Application number: 22861005.1
(22) Date of filing: 12.07.2022
(51) Int. Cl.: B01D 63/02, C02F 3/06, B01D 53/22

(54) **WATER TREATMENT APPARATUS, METHOD FOR WASHING BIOLOGICAL MEMBRANE IN WATER TREATMENT APPARATUS, AND METHOD FOR EVALUATING THICKNESS OF BIOLOGICAL MEMBRANE IN WATER TREATMENT APPARATUS**

(30) Priority: 25.08.2021 JP 2021136750
(71) Applicant: Kubota Corporation, Osaka-shi, Osaka 556-8601 (JP)
(72) Inventor: MATSUZAKI, Tomoko, Amagasaki-shi Hyogo 661-8567 (JP); EZAKI, Satoshi, Amagasaki-shi Hyogo 661-8567 (JP)
(74) Representative: van Breda, Jacobus
(86) International application number: PCT/JP2022/027413
(87) International publication number: WO 2023/026714

(57) **Abstract**

A water treatment apparatus 10 is provided with: a treatment vessel 11 into which a solution of interest S is fed; a hollow fiber membrane 12 which is immersed in the solution of interest S in the treatment vessel 11 and has gas permeability; and a biological membrane 30 which is formed on the outer surface of the hollow fiber membrane 12 and utilizes oxygen-containing air fed into the hollow fiber membrane 12. In the water treatment apparatus 10, the solution of interest S is treated with the biological membrane 30. The water treatment apparatus 10 is also provided with a gas-diffusing tube 13 which is located below the hollow fiber membrane 12 and ejects a washing gas to wash the biological membrane 30; and an oxygen concentration meter 14 which measures the oxygen concentration in discharged air that has passed through the hollow fiber membrane 12. In the gas-diffusing tube 13, the strength of washing of the biological membrane 30 is controlled on the basis of an oxygen concentration measured by the oxygen concentration meter 14.

## Description

### Technical Field

The present invention relates to a water treatment apparatus including: a gas permeable membrane that has gas permeability and is submerged in liquid to be treated in a treatment tank; and a biofilm that is formed on the outer surface of the gas permeable membrane and uses oxygen-containing gas supplied into the gas permeable membrane, and a method for cleaning the biofilm in the water treatment apparatus, and a method for evaluating thickness of the biofilm in the water treatment apparatus.

### Background Art

There have been water treatment apparatuses of this type, such as a membrane bioreactor as indicated in Japanese Patent Laid-Open No. 2006-101805. The membrane bioreactor in Japanese Patent Laid-Open No. 2006-101805 includes a casing, a plurality of hollow fiber membranes, a gas supply unit, and an air diffusion unit. The casing is submerged in liquid to be treated in a treatment tank and has open top and bottom. The plurality of hollow fiber membranes are arranged in the casing and have gas permeability. The gas supply unit supplies gas into the hollow fiber membranes. The air diffusion unit is installed below the casing and supplies the gas to the outside of the hollow fiber membranes. In the membrane bioreactor in Japanese Patent Laid-Open No. 2006-101805, a biofilm is formed on the outer surface of the hollow fiber membrane. The biofilm uses the gas supplied into the hollow fiber membranes. In the membrane bioreactor in Japanese Patent Laid-Open No. 2006-101805, an upward flow is generated in the casing by the gas supplied to the outside of the hollow fiber membranes.

The membrane bioreactor in Japanese Patent Laid-Open No. 2006-101805 can effectively clean thickened biofilms by way of bubbles contacting the surface of the hollow fiber membrane. Accordingly, the membrane bioreactor can keep high treatment performance stable for a long time.

### Summary of Invention

### Technical Problem

However, the membrane bioreactor in Japanese Patent Laid-Open No. 2006-101805 has no established way of monitoring in real time the amount of microorganisms (thickness of biofilm) adhered to the surface of the hollow fiber membrane or alternative indicators thereto. As a result, it is not possible to control the amount of microorganisms (thickness of biofilm) adhered to the surface of the hollow fiber membrane in response to the load variation of inflow of the liquid to be treated. Consequently, when the amount of microorganisms (thickness of biofilm) adhered to the surface of the hollow fiber membrane cannot be appropriately maintained, the membrane bioreactor in Japanese Patent Laid-Open No. 2006-101805 may experience a significant decrease in performance and cannot obtain a desired treated water quality. Since the insufficient control of the amount of microorganisms (thickness of biofilm) leads to a decrease in the oxygen transfer efficiency in the hollow fiber membrane, it is disadvantageous that energy saving with membrane aeration bioreactors (MABR) cannot be fully taken advantage of. Still disadvantageously, the decrease in the oxygen transfer efficiency in the hollow fiber membrane leads to an increase in the required membrane surface area for the hollow fiber membrane, which increases the size of the apparatus. Still disadvantageously, the increase in the required membrane surface area for the hollow fiber membrane leads to an increase in the amount of gas supplied to the hollow fiber membrane.

An object of the present invention is to provide a water treatment apparatus that can adequately maintain the thickness of the biofilm formed on the gas permeable membrane and that is responsive to the load variation of the liquid to be treated to be able to deliver high treatment performance.

### Solution to Problem

To attain the above-described object, a water treatment apparatus of the present invention includes: a treatment tank supplied with liquid to be treated; a gas permeable membrane that has gas permeability and is submerged in the liquid to be treated in the treatment tank; and a biofilm that is formed on the outer surface of the gas permeable membrane and uses oxygen-containing gas supplied into the gas permeable membrane, in which the water treatment apparatus treats the liquid to be treated by way of the biofilm and includes: a cleaning part that is located below the gas permeable membrane and cleans the biofilm by discharging cleaning gas; and a measurement part that measures oxygen concentration in the primary gas that has passed through the gas permeable membrane, and with the cleaning part, cleaning intensity on the biofilm is controlled based on the oxygen concentration measured by the measurement part.

According to the water treatment apparatus, it is possible to grasp increase or decrease of the oxygen consumption due to organisms in the biofilm from the oxygen concentration measured by the measurement part and determine the appropriateness of the thickness of the biofilm, and then control the cleaning intensity on the biofilm. It is therefore possible to maintain the biofilm formed on the outer surface of the gas permeable membrane at the adequate thickness.

In the water treatment apparatus of the present invention, the cleaning part increases cleaning intensity on the biofilm when the oxygen concentration after cleaning the biofilm is smaller than the oxygen concentration before cleaning the biofilm, and reduces the cleaning intensity on the biofilm when the oxygen concentration after cleaning the biofilm is larger than the oxygen concentration before cleaning the biofilm.

According to the water treatment apparatus, the cleaning intensity on the biofilm is controlled in response to the increase or decrease of the oxygen concentration before and after cleaning the biofilm. Therefore, the biofilm can be maintained precisely at the adequate thickness.

In the water treatment apparatus of the present invention, with the cleaning part, the cleaning intensity on the biofilm is controlled by varying at least one of requirements: frequency of discharging the cleaning gas to the biofilm; the amount of discharge per unit time of the cleaning gas to the biofilm; and discharging time of the cleaning gas to the biofilm.

According to the water treatment apparatus, it is possible to vary how the cleaning intensity on the biofilm is controlled depending on the condition of the biofilm.

The water treatment apparatus of the present invention includes a thickness evaluation device that evaluates the thickness of the biofilm on the outer surface of the gas permeable membrane based on the oxygen concentration measured by the measurement part.

According to the water treatment apparatus, it is possible to grasp increase or decrease of the oxygen consumption due to organisms in the biofilm from the oxygen concentration measured by the measurement part, and then evaluate the appropriateness of the thickness of the biofilm.

A method for cleaning a biofilm in a water treatment apparatus of the present invention is a method for cleaning a biofilm in a water treatment apparatus that includes: a treatment tank supplied with liquid to be treated; a gas permeable membrane that has gas permeability and is submerged in the liquid to be treated in the treatment tank; and a biofilm that is formed on the outer surface of the gas permeable membrane and uses oxygen-containing gas supplied into the gas permeable membrane, wherein the water treatment apparatus treats the liquid to be treated by way of the biofilm, and the method includes: cleaning the biofilm by discharging cleaning gas from below the gas permeable membrane; measuring oxygen concentration in the primary gas that has passed through the gas permeable membrane; and controlling cleaning intensity on the biofilm based on the measured oxygen concentration.

According to the method, it is possible to grasp increase or decrease of the oxygen consumption due to organisms in the biofilm from the oxygen concentration in the primary gas that has passed through the gas permeable membrane and determine the appropriateness of the thickness of the biofilm, and then control the cleaning intensity on the biofilm. It is therefore possible to maintain the biofilm formed on the outer surface of the gas permeable membrane at the adequate thickness.

The method for cleaning a biofilm in a water treatment apparatus of the present invention includes: measuring the oxygen concentration in the primary gas that has passed through the gas permeable membrane before and after cleaning the biofilm; and increasing the cleaning intensity on the biofilm when the measured oxygen concentration after cleaning the biofilm is smaller than the oxygen concentration before cleaning the biofilm and reducing the cleaning intensity on the biofilm when the measured oxygen concentration after cleaning the biofilm is larger than the oxygen concentration before cleaning the biofilm.

According to the method, the cleaning intensity on the biofilm is controlled in response to the increase or decrease of the oxygen concentration before and after cleaning the biofilm. Therefore, the biofilm can be maintained precisely at the adequate thickness.

In the method for cleaning a biofilm in a water treatment apparatus of the present invention, the cleaning intensity on the biofilm is controlled by varying at least one of requirements: frequency of discharging the cleaning gas to the biofilm; the amount of discharge per unit time of the cleaning gas to the biofilm; and discharging time of the cleaning gas to the biofilm.

According to the method, it is possible to vary how the cleaning intensity on the biofilm is controlled depending on the condition of the biofilm.

A method for evaluating thickness a biofilm in a water treatment apparatus of the present invention is a method for evaluating thickness of a biofilm in a water treatment apparatus that includes: a treatment tank supplied with liquid to be treated; a gas permeable membrane that has gas permeability and is submerged in the liquid to be treated in the treatment tank; and a biofilm that is formed on the outer surface of the gas permeable membrane and uses oxygen-containing gas supplied into the gas permeable membrane, wherein the water treatment apparatus treats the liquid to be treated by way of the biofilm, and the method includes evaluating the thickness of the biofilm on the outer surface of the gas permeable membrane based on oxygen concentration in the primary gas that has passed through the gas permeable membrane.

According to the method, it is possible to grasp increase or decrease of the oxygen consumption due to organisms in the biofilm from the oxygen concentration in the primary gas that has passed through the gas permeable membrane, and then evaluate the appropriateness of the thickness of the biofilm. Therefore, the biofilm formed on the outer surface of the gas permeable membrane can be maintained at the adequate thickness.

The method for evaluating thickness of a biofilm in a water treatment apparatus of the present invention includes: cleaning the biofilm by discharging cleaning gas from below the gas permeable membrane; measuring the oxygen concentration in the primary gas that has passed through the gas permeable membrane before and after cleaning the biofilm; and when the measured oxygen concentration after cleaning the biofilm is smaller than the oxygen concentration before cleaning the biofilm, determining that the thickness of the biofilm is thicker than thickness suitable for treating the liquid to be treated and when the measured oxygen concentration after cleaning the biofilm is larger than the oxygen concentration before cleaning the biofilm, determining that the thickness of the biofilm is thinner than thickness suitable for treating the liquid to be treated.

According to the method, it is possible to evaluate the appropriateness of the thickness of the biofilm in response to the increase or decrease of the oxygen concentration before and after cleaning the biofilm. Therefore, the biofilm can be maintained precisely at the adequate thickness.

### Advantageous Effects of Invention

According to the water treatment apparatus, the method for cleaning a biofilm in a water treatment apparatus, and the method for evaluating thickness of a biofilm in a water treatment apparatus of the present invention, cleaning intensity on the biofilm is controlled based on the oxygen concentration in the primary gas that has passed through the gas permeable membrane. As a result, it is possible to grasp increase or decrease of the oxygen consumption due to organisms in the biofilm, and then maintain the biofilm formed on the outer surface of the gas permeable membrane at the adequate thickness. It is therefore possible to provide a water treatment apparatus that is responsive to the load variation of the liquid to be treated to be able to deliver high treatment performance. Furthermore, since the oxygen transfer efficiency in the hollow fiber membrane is improved, a required membrane surface area for the hollow fiber membrane is minimized, which reduces the size of the water treatment apparatus, and the amount of gas supplied to the hollow fiber membrane can be reduced.

### Brief Description of Drawings

[FIG. 1] FIG. 1 is a schematic diagram of a water treatment apparatus according to an embodiment of the present invention.
[FIG. 2A] FIG. 2A is a partially enlarged sectional view of a hollow fiber membrane and a biofilm in the water treatment apparatus, illustrating the case in which the biofilm is adequately formed on the hollow fiber membrane.
[FIG. 2B] FIG. 2B is a partially enlarged sectional view of a hollow fiber membrane and a biofilm in the water treatment apparatus, illustrating the case in which the biofilm is thicken with respect to the hollow fiber membrane.
[FIG. 2C] FIG. 2C is a partially enlarged sectional view of a hollow fiber membrane and a biofilm in the water treatment apparatus, illustrating the case in which the biofilm tends to be thicken with respect to the hollow fiber membrane.
[FIG. 2D] FIG. 2D is a partially enlarged sectional view of a hollow fiber membrane and a biofilm in the water treatment apparatus, illustrating the case in which the biofilm is thinned with respect to the hollow fiber membrane.
[FIG. 3] FIG. 3 illustrates variation of the oxygen concentration (off-gas oxygen concentration) measured by an oxygen sensor against treatment time (elapsed time) for the liquid to be treated in the water treatment apparatus, illustrating the case in which a decrease in the oxygen concentration is observed after cleaning the biofilm (scouring).
[FIG. 4] FIG. 4 illustrates variation of the oxygen concentration (off-gas oxygen concentration) measured by an oxygen sensor against treatment time (elapsed time) for the liquid to be treated in the water treatment apparatus, illustrating the case in which an increase in the oxygen concentration is observed after cleaning the biofilm (scouring).
[FIG. 5] FIG. 5 illustrates variation of the oxygen concentration (off-gas oxygen concentration) measured by an oxygen sensor against treatment time (elapsed time) for the liquid to be treated in the water treatment apparatus.

### Description of Embodiments

The water treatment apparatus of the present invention will now be described.

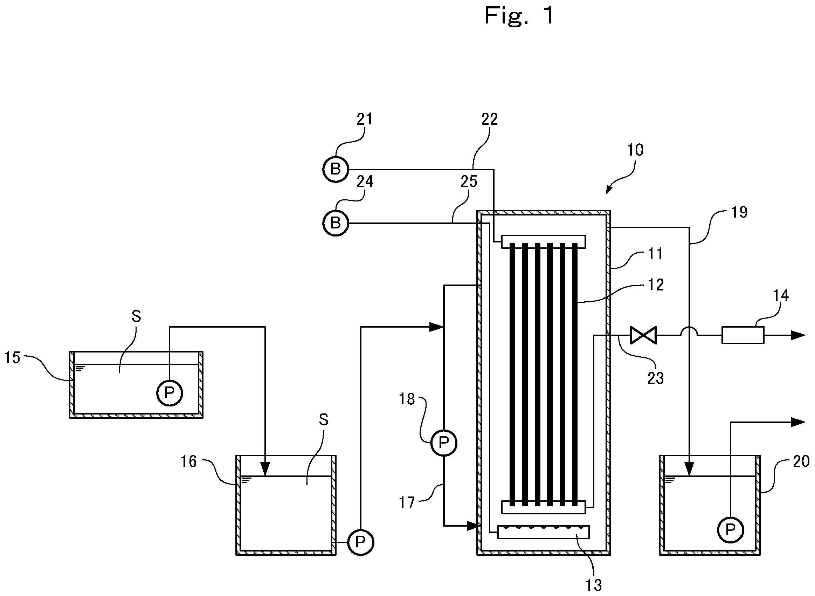

As illustrated in FIG. 1, a water treatment apparatus 10 according to an embodiment of the present invention mainly includes: a treatment tank 11, a hollow fiber membrane 12 (an example of "gas permeable membrane"), an air diffusion pipe 13 (an example of "cleaning part"), and an oxygen sensor 14 (an example of "measurement part"). The treatment tank 11 is supplied with liquid to be treated S. The hollow fiber membrane 12 is submerged in the liquid to be treated S in the treatment tank 11. The air diffusion pipe 13 is located below the hollow fiber membrane 12, and discharges cleaning air (an example of "cleaning gas"). The oxygen sensor 14 measures the oxygen concentration in emitted air (an example of "primary gas") that has passed through the hollow fiber membrane 12.

In the treatment tank 11, the liquid to be treated S (raw water) is supplied from the bottom portion of the treatment tank 11. The liquid to be treated S that has treated in the treatment tank 11 (treated water) flows out from the top portion of the treatment tank 11. The liquid to be treated S (raw water) is supplied into the treatment tank 11 from a primary sedimentation outflow water channel 15 through a raw water tank 16 and through a first piping 17. The liquid to be treated S supplied into the treatment tank 11 is circulated by a circulation pump 18. The liquid to be treated S that has treated in the treatment tank 11 (treated water) flows out and into a treated water tank 20 through a second piping 19.

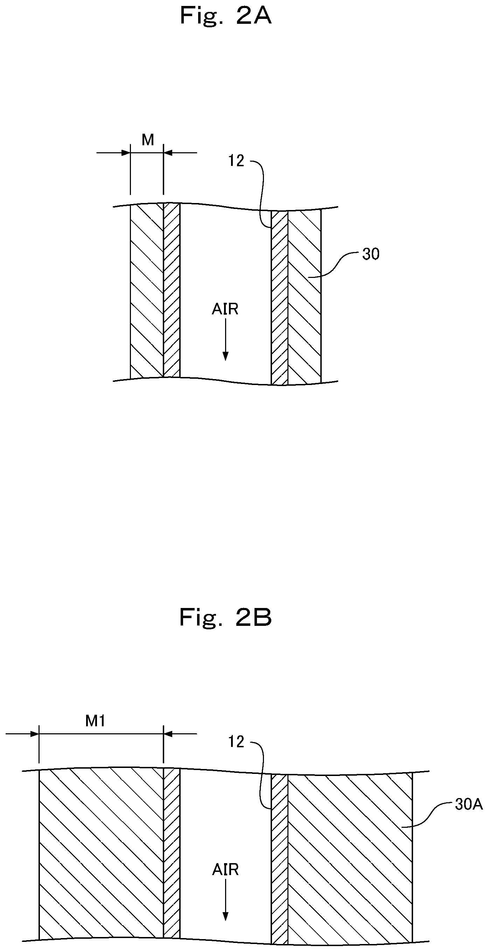

The hollow fiber membrane 12 is arranged in plurality extending in the up-down direction of the treatment tank 11. The hollow fiber membrane 12 has gas permeability. The hollow fiber membrane 12 allows oxygen in the air to selectively permeate the hollow fiber membrane. The hollow fiber membrane 12 is mainly formed of a non-porous membrane. However, any other membrane such as a composite membrane of non-porous and porous membranes may be used. As illustrated in FIG. 1 and FIG. 2A, air (an example of "oxygen-containing gas") is supplied into the hollow fiber membrane 12 from a first blower 21 through a third piping 22. The first blower 21 is provided to the outside of the treatment tank 11. The air supplied by the first blower 21 permeates the membrane surface of the hollow fiber membrane 12 without being turned into bubbles and dissolves into the liquid to be treated S in the treatment tank 11. The emitted air that has passed through the hollow fiber membrane 12 is emitted through a fourth piping 23.

As illustrated in FIGS. 2A to 2D, a biofilm 30 is formed on the outer surface of the hollow fiber membrane 12. In the biofilm 30, organisms in the biofilm 30 use oxygen contained in the air from the hollow fiber membrane 12 to biologically remove materials to be treated (for example, organic matters and nitrogen compounds) in the liquid to be treated S.

As illustrated in FIG. 2A, the biofilm 30 is formed to have a predetermined thickness M from the outer surface of the hollow fiber membrane 12. In proportion to the increase in the thickness M of the biofilm 30, the amount of organisms in the biofilm 30 increases.

For example, as illustrated in FIG. 2B, in the case of a biofilm 30A that has a thickness M1, which is thicker than the thickness M of the biofilm 30, the amount of organisms in the biofilm 30A is larger than the biofilm 30 as much as the thickness increases. As a result, the treatment performance on the liquid to be treated S in the biofilm 30A is improved compared to the biofilm 30. However, the outer surface side of the biofilm 30A will be at a distance from the outer surface of the hollow fiber membrane 12 as much as the thickness increases. As a result, on the outer surface side of the biofilm 30A, due to difficulty in oxygen supply from the hollow fiber membrane 12, the contacting efficiency with oxygen decreases. Therefore, the biofilm 30A has a lower oxygen transfer efficiency than the biofilm 30, and exhibits a poorer treatment efficiency for the liquid to be treated S relative to the amount of air supply.

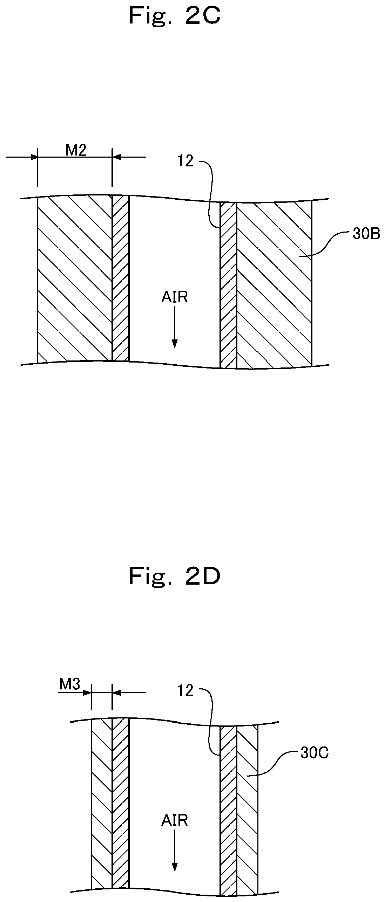

On the other hand, as illustrated in FIG. 2C, in the case of a biofilm 30B that has a thickness M2, which is thicker than the thickness M of the biofilm 30 and thinner than the thickness M1 of the biofilm 30A, the outer surface side of the biofilm 30B is closer to the outer surface of the hollow fiber membrane 12 than the biofilm 30A. As a result, the outer surface side of the biofilm 30B is supplied with oxygen from the hollow fiber membrane 12 more easily than the biofilm 30A, and therefore the contacting efficiency with oxygen is improved. However, the amount of organisms in the biofilm 30B is larger than the biofilm 30 as much as the thickness increases. Therefore, the oxygen consumption due to the organisms in the biofilm 30B is larger than the biofilm 30. As a result, when the amount of air (the amount of oxygen) to be supplied to the hollow fiber membrane 12 (biofilm 30B) is the same as the biofilm 30, the amount of oxygen supplied to the biofilm 30B will be deficient.

As illustrated in FIG. 2D, in the case of a biofilm 30C that has a thickness M3, which is thinner than the thickness M of the biofilm 30, the amount of organisms in the biofilm 30C is smaller than the biofilm 30 as much as the thickness decreases. Therefore, the oxygen consumption due to the organisms in the biofilm 30C is smaller than the biofilm 30. As a result, when the amount of air (the amount of oxygen) to be supplied to the hollow fiber membrane 12 (biofilm 30C) is the same as the biofilm 30, the biofilm 30C is supplied with sufficient oxygen. However, since organisms in the biofilm 30C that should treat the liquid to be treated S is less than the biofilm 30, the treatment performance on the liquid to be treated S is reduced compared to the biofilm 30. Furthermore, the biofilm 30C is to be supplied with oxygen surpassing the amount of oxygen consumed by organisms in the biofilm 30C, and therefore the oxygen transfer efficiency is smaller than the biofilm 30.

As described above, the thickness M of the biofilm 30 is set in consideration of conditions such as the contacting efficiency of the biofilm 30 (organisms in the biofilm 30) with oxygen, and the oxygen transfer efficiency in the biofilm 30.

As illustrated in FIG. 1, the air diffusion pipe 13 intermittently discharges cleaning air from below the hollow fiber membrane 12. The cleaning air discharged from the air diffusion pipe 13 is supplied to the air diffusion pipe 13 through a fifth piping 25 from a second blower 24 provided to the outside of the treatment tank 11. The air diffusion pipe 13 supplies the cleaning air as bubbles into the liquid to be treated S. The air diffusion pipe 13 achieves cleaning of the biofilm 30 by way of supplied bubbles and an upward flow generated by supplying the bubbles to create a turbulent flow or a shear force over the surface of the biofilm 30. Gas discharged from the air diffusion pipe 13 is not limited to the cleaning air, but may be, for example, nitrogen gas, a biogas, or a recycle of exhaust air (off-gas) flowing through the fourth piping 23, as long as the gas can clean the biofilm 30.

The oxygen sensor 14 is provided on the fourth piping 23. The oxygen sensor 14 measures the oxygen concentration in the emitted air flowing through the fourth piping 23. In the water treatment apparatus 10, the increase or decrease of the oxygen consumption due to organisms in the biofilm 30 is determined based on the oxygen concentration measured by the oxygen sensor 14, and the increase or decrease of the thickness of the biofilm 30 formed on the outer surface of the hollow fiber membrane 12 is evaluated.

As described above, in the biofilm 30, organisms in the biofilm 30 uses oxygen supplied from the hollow fiber membrane 12 to biologically remove materials to be treated in the liquid to be treated S. In this way, when the biofilm 30 tends to be thicken (the amount of organisms in the biofilm 30 tends to increase) (in the case of FIG. 2C), the oxygen consumption due to the organisms in the biofilm 30 increase. As a result, the concentration of oxygen contained in the exhaust air that has passed through the hollow fiber membrane 12 decrease.

On the other hand, when the biofilm 30 is excessively thicken (in the case of FIG. 2B) and when the biofilm 30 is excessively thinned (the amount of organisms in the biofilm 30 excessively decreases) (in the case of FIG. 2D), the oxygen consumption due to organisms in the biofilm 30 decreases. As a result, the concentration of oxygen contained in the exhaust air that has passed through the hollow fiber membrane 12 increases.

In this way, in the water treatment apparatus 10, the concentration of oxygen contained in the exhaust air that has passed through the hollow fiber membrane 12 is measured by the oxygen sensor 14, and thereby the increase or decrease of the oxygen consumption due to organisms in the biofilm 30 is determined. From the determined increase or decrease of the oxygen consumption, the increase or decrease of the thickness of the biofilm 30 formed on the outer surface of the hollow fiber membrane 12 is determined. That is, when the oxygen concentration measured by the oxygen sensor 14 is smaller than a predetermined oxygen concentration (the oxygen concentration in the case in which the thickness M of the biofilm 30 is the adequate thickness), it is possible to determine that the thickness of the biofilm 30 is larger than the adequate thickness M, and the biofilm 30 tends to be thicken. When the oxygen concentration measured by the oxygen sensor 14 is larger than the predetermined oxygen concentration, it is possible to determine that the thickness of the biofilm 30 is smaller than the adequate thickness M, and the biofilm 30 is excessively scaled off and tends to be thinned. Otherwise, when the oxygen concentration measured by the oxygen sensor 14 is larger than the predetermined oxygen concentration, it is possible to determine that the thickness of the biofilm 30 is sufficiently larger than the adequate thickness M, and the biofilm 30 is excessively thickened.

In the water treatment apparatus 10, based on the increase or decrease of the thickness of the biofilm 30 as determined from the results of measurement of the oxygen sensor 14, the appropriateness of the thickness of the biofilm 30 is evaluated, and then cleaning intensity on the biofilm 30 by way of the air diffusion pipe 13 is controlled. Here, the cleaning intensity on the biofilm 30 is controlled by varying at least one of requirements: frequency of discharging the cleaning air, which is discharged to the biofilm 30 from the air diffusion pipe 13; the amount of discharge per unit time of the cleaning air, which is discharged to the biofilm 30 from the air diffusion pipe 13; and the discharging time of the cleaning air discharged to the biofilm 30 from the air diffusion pipe 13.

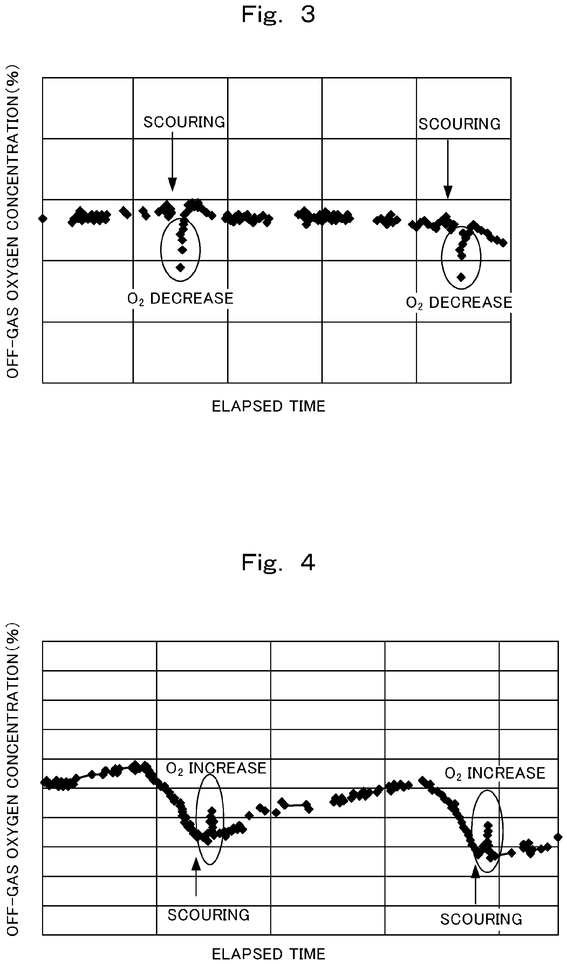

As illustrated in FIG. 3, when a decrease in the oxygen concentration (off-gas oxygen concentration) measured by the oxygen sensor 14 is observed after the biofilm 30 is subjected to cleaning (scouring) (arrowed portions in FIG. 3) by way of the air diffusion pipe 13, it can be considered that the amount of organisms in the biofilm 30 formed on the hollow fiber membrane 12 increases and the oxygen consumption due to the organisms increases. Therefore, it is suggested that the thickness M of the biofilm 30 is excessive. In the water treatment apparatus 10, then, the cleaning intensity on the biofilm 30 by way of the air diffusion pipe 13 is increased to scale off a thickened biofilm 30 and bring the thickness of the biofilm 30 into the appropriate thickness M.

On the other hand, as illustrated in FIG. 4, when an increase in the oxygen concentration (off-gas oxygen concentration) measured by the oxygen sensor 14 is observed after the biofilm 30 is subjected to cleaning (scouring) (arrowed portions in FIG. 4) by way of the air diffusion pipe 13, it can be considered that the amount of organisms in the biofilm 30 formed on the hollow fiber membrane 12 decreases and the oxygen consumption due to the organisms decreases. Therefore, it is suggested that the thickness M of the biofilm 30 is too low. In the water treatment apparatus 10, then, the cleaning intensity on the biofilm 30 by way of the air diffusion pipe 13 is lowered to promote the growth of the biofilm 30 until the thinned biofilm 30 reaches the appropriate thickness M.

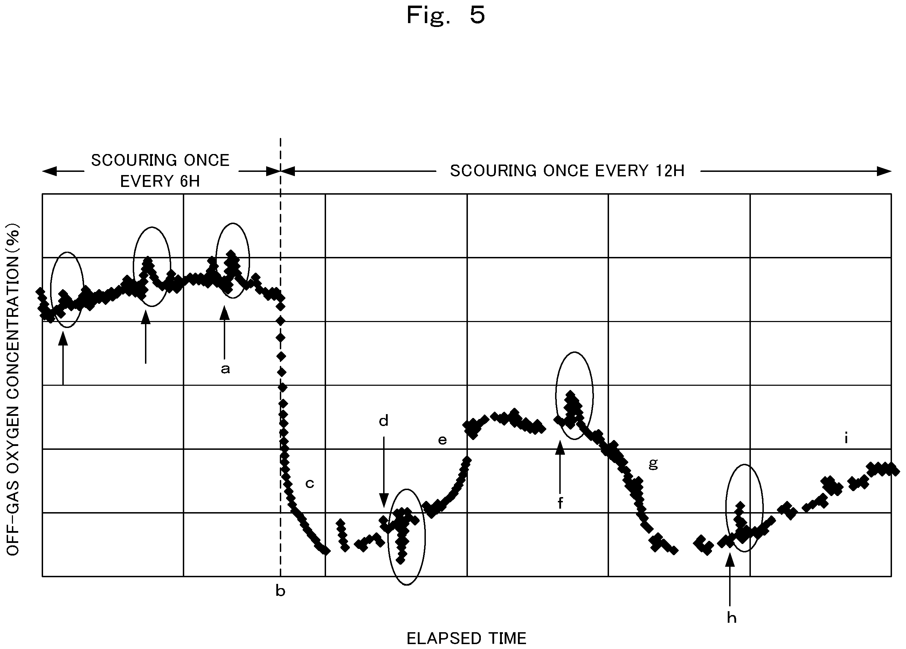

Control of the cleaning intensity on the biofilm 30 by way of the air diffusion pipe 13 will now be described. FIG. 5 illustrates variation of the oxygen concentration (off-gas oxygen concentration) measured by the oxygen sensor 14 against treatment time (elapsed time) for the liquid to be treated S in the water treatment apparatus 10. That is, FIG. 5 illustrates variation of the oxygen concentration (off-gas oxygen concentration) measured by the oxygen sensor 14 (variation of the oxygen consumption due to organisms in the biofilm 30, variation of the amount of organisms in the biofilm 30) against treatment time (elapsed time) for the liquid to be treated S in the water treatment apparatus 10. In the water treatment apparatus 10, the thickness of the biofilm 30 is controlled such that it has the appropriate thickness M by cleaning the biofilm 30 by way of the air diffusion pipe 13 once every predetermined time (for example, once every six hours). In FIG. 5, the cleaning (scouring) of the biofilm 30 by way of the air diffusion pipe 13 is performed at time periods indicated by arrows in the figure.

As illustrated in FIG. 5 at the reference character "a", when the off-gas oxygen concentration increases after scouring, that is, when the amount of organisms in the biofilm 30 decreases after scouring, it is determined that the biofilm 30 has been excessively scaled off by the scouring compared to the adequate thickness M. Accordingly, as illustrated in FIG. 5 at the reference character "b", by lowering the cleaning intensity of the scouring, the growth of the biofilm 30 is promoted until the thinned biofilm 30 reaches the appropriate thickness M. For example, by changing the frequency of the scouring (frequency of discharging the cleaning air to the biofilm 30) from once every six hours to once every 12 hours, the cleaning intensity of the scouring is lowered.

Lowering the frequency of scouring causes the biofilm 30 to grow without being scaled off. As a result, as illustrated in FIG. 5 at the reference character "c", the thickness M of the biofilm 30 turns into an increase. Therefore, the off-gas oxygen concentration decreases.

As illustrated in FIG. 5 at the reference character "d", when a further decrease in the off-gas oxygen concentration is observed after scouring, scaling off of the biofilm 30 by way of the scouring is insufficient. Consequently, the thickness of the biofilm 30 is larger than the adequate thickness M and the amount of organisms in the biofilm 30 is larger than an adequate amount.

Furthermore, as illustrated in FIG. 5 at the reference character "e", when an increase in the off-gas oxygen concentration that has decreased after scouring is observed, the contacting efficiency of the organisms in the biofilm 30 with oxygen is poor, and the organisms in the biofilm 30 fail to consume oxygen due to the excessively thickened biofilm 30 as illustrated in FIG. 2B. As a result, the off-gas oxygen concentration increases. Therefore, by increasing the amount of discharge per unit time of the cleaning air in the air diffusion pipe 13 or extending the discharging time of the cleaning air in the air diffusion pipe 13, the thickness of the biofilm 30 is controlled such that it has the appropriate thickness M.

Still further, as illustrated in FIG. 5 at the reference character "f", when an increase in the off-gas oxygen concentration is observed after scouring, that is, when a decrease in the amount of organisms in the biofilm 30 is observed after scouring, the biofilm 30 is in an excessively scaled off state by the scouring compared to the adequate thickness M. Here, inflow of highly loaded liquid to be treated S into the treatment tank 11 accelerates the reaction of consuming oxygen in the biofilm 30, which reduces the off-gas oxygen concentration and causes the biofilm 30 to grow, as illustrated in FIG. 5 at the reference character "g".

Furthermore, as illustrated in FIG. 5 at the reference character "h", when an increase in the off-gas oxygen concentration is observed after scouring instead of the decrease as at the reference character "d" in FIG. 5, the biofilm 30 is scaled off without being thickened and in a thinner state than the adequate thickness M. Here, as illustrated in FIG. 5 at the reference character "i", it can be seen that since the off-gas oxygen concentration tends to rise, the biofilm 30 is thinner than the adequate thickness M without being thickened.

In this way, in the water treatment apparatus 10 that measures the off-gas oxygen concentration at or more than a predetermined amount by the oxygen sensor 14 as illustrated in FIG. 5 at the reference character "a", by lowering the frequency of scouring (cleaning intensity of scouring) to reduce the off-gas oxygen concentration as illustrated in FIG. 5 at the reference character "b", it is possible to improve the consumption efficiency of oxygen in the biofilm 30.

As described above, according to the embodiment, the cleaning intensity on the biofilm 30 is controlled based on the oxygen concentration in the air that has passed through the hollow fiber membrane 12. As a result, it is possible to grasp increase or decrease of the oxygen consumption due to organisms in the biofilm 30, and then maintain the biofilm 30 formed on the outer surface of the hollow fiber membrane 12 at the adequate thickness M. It is therefore possible to provide the water treatment apparatus 10 that is responsive to the load variation of the liquid to be treated S to be able to deliver high treatment performance. Furthermore, since the oxygen transfer efficiency (oxygen consumption efficiency) in the hollow fiber membrane 12 is improved, a required membrane surface area for the hollow fiber membrane 12 is minimized, which reduces the size of the water treatment apparatus 10, and the amount of air supplied to the hollow fiber membrane 12 can be reduced.

### Reference Signs List

- 10:: Water treatment apparatus
- 11:: Treatment tank
- 12:: Hollow fiber membrane (gas permeable membrane)
- 13:: Air diffusion pipe (cleaning part)
- 14:: Oxygen sensor (measurement part)
- 30:: Biofilm
- S:: Liquid to be treated

## Claims

1. A water treatment apparatus comprising:
a treatment tank supplied with liquid to be treated;
a gas permeable membrane that has gas permeability and is submerged in the liquid to be treated in the treatment tank; and
a biofilm that is formed on an outer surface of the gas permeable membrane and uses oxygen-containing gas supplied into the gas permeable membrane,
wherein the water treatment apparatus treats the liquid to be treated by way of the biofilm and comprises:
a cleaning part that is located below the gas permeable membrane and cleans the biofilm by discharging cleaning gas; and
a measurement part that measures oxygen concentration in primary gas that has passed through the gas permeable membrane, and
with the cleaning part, cleaning intensity on the biofilm is controlled based on the oxygen concentration measured by the measurement part.

2. The water treatment apparatus according to claim 1, wherein
the cleaning part
increases the cleaning intensity on the biofilm when the oxygen concentration after cleaning the biofilm is smaller than the oxygen concentration before cleaning the biofilm, and
reduces the cleaning intensity on the biofilm when the oxygen concentration after cleaning the biofilm is larger than the oxygen concentration before cleaning the biofilm.

3. The water treatment apparatus according to claim 1 or 2, wherein
with the cleaning part, the cleaning intensity on the biofilm is controlled by varying at least one of requirements: frequency of discharging the cleaning gas to the biofilm; an amount of discharge per unit time of the cleaning gas to the biofilm; and discharging time of the cleaning gas to the biofilm.

4. The water treatment apparatus according to claim 1 or 2, further comprising
a thickness evaluation device that evaluates the thickness of the biofilm on the outer surface of the gas permeable membrane based on the oxygen concentration measured by the measurement part.

5. A method for cleaning a biofilm in a water treatment apparatus that includes: a treatment tank supplied with liquid to be treated; a gas permeable membrane that has gas permeability and is submerged in the liquid to be treated in the treatment tank; and a biofilm that is formed on an outer surface of the gas permeable membrane and uses oxygen-containing gas supplied into the gas permeable membrane, wherein the water treatment apparatus treats the liquid to be treated by way of the biofilm, and the method comprises:
cleaning the biofilm by discharging cleaning gas from below the gas permeable membrane;
measuring oxygen concentration in primary gas that has passed through the gas permeable membrane; and
controlling cleaning intensity on the biofilm based on the measured oxygen concentration.

6. The method for cleaning a biofilm in a water treatment apparatus according to claim 5, further comprising:
measuring the oxygen concentration in primary gas that has passed through the gas permeable membrane before and after cleaning the biofilm; and
increasing the cleaning intensity on the biofilm when the measured oxygen concentration after cleaning the biofilm is smaller than the oxygen concentration before cleaning the biofilm and
reducing the cleaning intensity on the biofilm when the measured oxygen concentration after cleaning the biofilm is larger than the oxygen concentration before cleaning the biofilm.

7. The method for cleaning a biofilm in a water treatment apparatus according to claim 5 or 6, wherein
the cleaning intensity on the biofilm is controlled by varying at least one of requirements: frequency of discharging the cleaning gas to the biofilm; an amount of discharge per unit time of the cleaning gas to the biofilm; and discharging time of the cleaning gas to the biofilm.

8. A method for evaluating thickness of a biofilm in a water treatment apparatus that includes:
a treatment tank supplied with liquid to be treated; a gas permeable membrane that has gas permeability and is submerged in the liquid to be treated in the treatment tank; and a biofilm that is formed on an outer surface of the gas permeable membrane and uses oxygen-containing gas supplied into the gas permeable membrane, wherein the water treatment apparatus treats the liquid to be treated by way of the biofilm, and the method comprises:
evaluating the thickness of the biofilm on the outer surface of the gas permeable membrane based on oxygen concentration in primary gas that has passed through the gas permeable membrane.

9. The method for evaluating thickness of a biofilm in a water treatment apparatus according to claim 8, further comprising:
cleaning the biofilm by discharging cleaning gas from below the gas permeable membrane;
measuring the oxygen concentration in primary gas that has passed through the gas permeable membrane before and after cleaning the biofilm; and
when the measured oxygen concentration after cleaning the biofilm is smaller than the oxygen concentration before cleaning the biofilm, determining that the thickness of the biofilm is thicker than thickness suitable for treating the liquid to be treated and
when the measured oxygen concentration after cleaning the biofilm is larger than the oxygen concentration before cleaning the biofilm, determining that the thickness of the biofilm is thinner than thickness suitable for treating the liquid to be treated.
